# EUROPEAN PATENT APPLICATION

(11) **EP 1 737 214 A2**
(43) Date of publication of application: **27.12.2006**
(21) Application number: 06252992.0
(22) Date of filing: 09.06.2006
(51) Int. Cl.: H04N 5/21

(54) **Video processing apparatus**

(30) Priority: 20.06.2005 KR 20050053178
(71) Applicant: Samsung Electronics Co., Ltd., Suwon-si, Gyeonggi-Do (KR)
(72) Inventor: Okanno, Yasuhiro, Suwon-si Gyeonggi-do (KR)
(74) Representative: Clark, David James

(57) **Abstract**

A video processing apparatus including: a signal input unit (110, 160) to receive one among a plurality of picture signals different in resolution; a first signal processor (120) to process and output the picture signal; a noise filter (130) to filter noise out of the picture signal; a second signal processor (144) to process and output the picture signal output from the noise filter (130); and a controller (150) to control the second signal processor (144) to operate when the picture signal has the resolution lower than a predetermined value.

## Description

Apparatus consistent with the present invention relate to a video processing, more particularly but not exclusively to video processing apparatus that is manufactured with a low production cost and displays a high quality picture.

A video processing apparatus such as a television (TV) receives a digital TV broadcasting signal, a cable TV broadcasting signal, etc. from a broadcasting station, and processes the received picture signal to display a predetermined picture. Further, the video processing apparatus can receive the picture signal from various video devices such as a digital camera, a video game or the like, and process the received picture signal to display a predetermined picture.

Recently, video processing apparatus have been developed to process received picture signals corresponding to various formats. Furthermore, video devices have been manufactured to output a low quality picture signal in order to reduce the production cost thereof. Example low quality picture signals include a picture signal having low resolution, and a picture signal having much noise. However, even though a low quality picture signal is input, it is desirable for the video processing apparatus to display a high quality picture to meet user expectations.

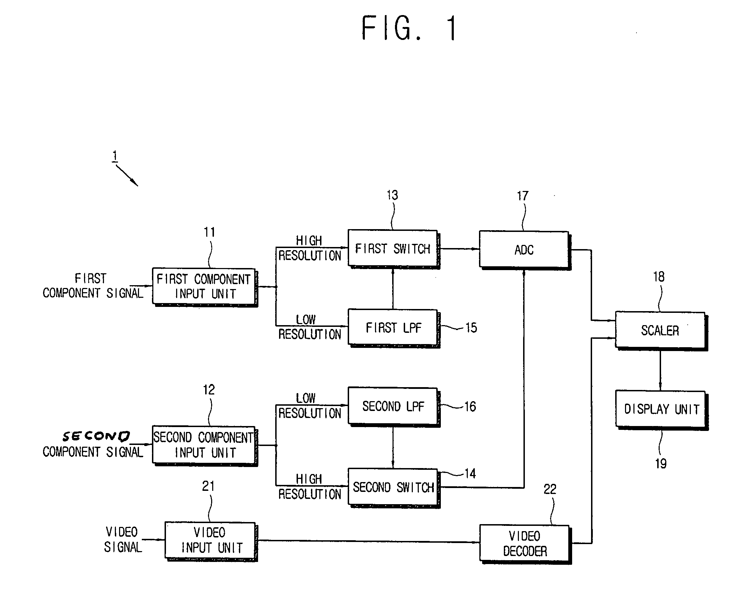

Such a known video processing apparatus is schematically illustrated in FIG. 1. As shown in FIG. 1, a video processing apparatus 1 includes a first component input unit 11 to receive a first component signal; a first low pass filter (LPF) 15 to receive a low quality picture, i.e., a low resolution picture signal out of the first component signal, and filter noise from the low quality picture signal; a first switch 13 to output either of a high quality picture signal, i.e., a high resolution picture signal out of the first component signal or the low quality picture signal whose noise is filtered by the first LPF 15 selectively according to a user's selection; an analog-to-digital converter (ADC) 17 to convert the picture signal output from the first switch 13; a display unit 19 including a panel such as a plasma display panel (PDP) on which a picture is displayed; and a scaler 18 to process the converted picture signal to be suitably displayed on the display unit 19.

Further, the video processing apparatus 1 can receive one or more picture signals corresponding to various formats. In this case, the video processing apparatus 1 can additionally include a second component input unit 12 to receive a second component signal; a second LPF 16 to receive a low resolution picture signal out of the second component signal, and filter noise from the low resolution picture signal; and a second switch 14 to output either of a high resolution picture signal out of the second component signal or the low resolution picture signal whose noise is filtered by the second LPF 16 selectively according to a user's selection. At this time, the ADC 17 converts the picture signal output from the second switch 14, and the scaler 18 processes the converted picture signal to be suitably displayed on the display unit 19.

However, the conventional video processing apparatus 1 needs the first switch 13 or the second switch 14 to selectively output the high resolution picture signal or the low resolution picture signal, thereby increasing the production cost thereof. Particularly, in the case where the first or second component signal has a format such as a "1080i" format of a high definition television (HDTV), the first switch 13 or the second switch 14 should process a high frequency picture signal into a high definition signal, thereby further increasing the production cost thereof.

Also, with regard to the picture signal having a format such as a video signal, the video processing apparatus 1 can include a video input unit 21 to receive a video signal, and a video decoder 22 to decode the received video signal. In this case, the video processing apparatus 1 should suitably process a non-standard video signal as well as a standard video signal.

A non-standard first or second component signal as well as the non-standard video signal but also may be input. In this case, the video processing apparatus 1 may be unable to deal with the non-standard signals, for example if the non-standard signals are of a low signal level.

It is an aim of preferred embodiments of the present invention to address at least one problem associated with the prior art, whether identified herein, or otherwise.

According to an aspect of the present invention, there is provided a video processing apparatus comprising: a signal input unit arranged to receive a picture signal among a plurality of picture signals different in resolution; a first signal processor arranged to process and output the picture signal; a noise filter arranged to filter noise from the picture signal; a second signal processor arranged to process and output the picture signal output from the noise filter; and a controller arranged to control the second signal processor to operate when the picture signal has the resolution lower than predetermined value.

According to a second aspect of the present invention, there is provided a video processing apparatus comprising: a first signal input unit to receive one among a plurality of first picture signals having different resolutions; a second signal input unit arranged to receive one among a plurality of second picture signals having different resolutions; a switch arranged to receive the first and second picture signals and output one of the first and second picture signals; a first signal processor arranged to process and output at least one of the first and second picture signals; a noise filter to filter noise out of the first or second picture signal output from the switch; a second signal processor arranged to process and output the first or second picture signal output from the noise filter; and a controller arranged to control the switch to selectively output one of the first and second signals according to selection of a user, and control the second signal processor to operate when the first or second picture signal has the resolution lower than a predetermined value.

Suitably, the first signal processor and the second signal processor comprise a first A/D converter and a second A/D converter respectively, to apply an A/D converting operation to the picture signal.

Suitably, the noise filter comprises a low pass filter arranged to filter a high frequency component out of the picture signal.

Suitably, the controller determines that the resolution of the picture signal is lower than the predetermined value if the picture signal has a frequency lower than a reference frequency.

Suitably, the video processing apparatus further comprises a gain controller arranged to control gain of the picture signal output from the noise filter.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a block diagram schematically illustrating a known video processing apparatus;
FIG. 2 is a block diagram schematically illustrating a video processing apparatus according to an exemplary embodiment of the present invention; and
FIG. 3 is a block diagram schematically illustrating a video processing apparatus according to another exemplary embodiment of the present invention.

Reference will now be made in detail to the exemplary embodiments of the present invention, as illustrated in the accompanying drawings.

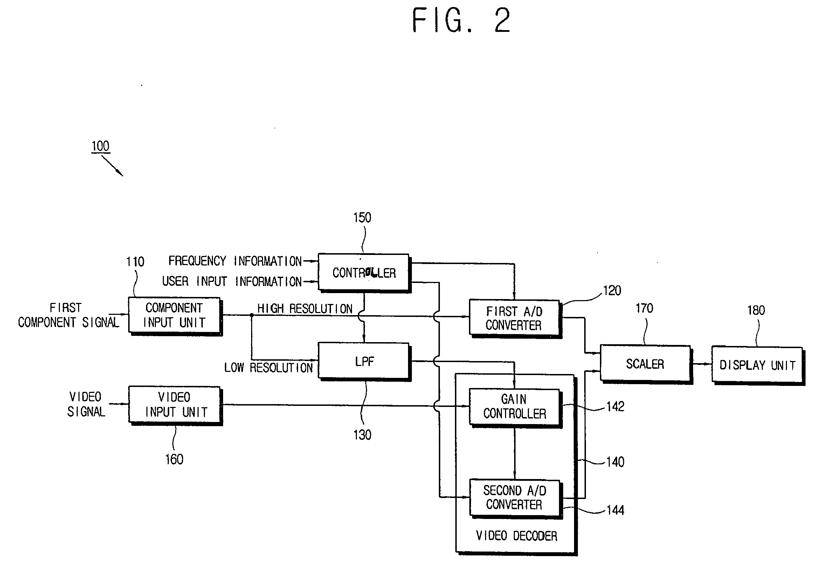

FIG. 2 is a block diagram schematically illustrating a video processing apparatus according to an exemplary embodiment of the present invention. The video processing apparatus 100 may be a TV that receives a digital TV broadcasting signal, a cable TV broadcasting signal, or the like from a broadcasting station, and processes the received picture signal to display a predetermined picture. Further, the video processing apparatus 100 can receive the picture signal from various video devices such as a video cassette recorder (VCR), a digital versatile disc (DVD) player, a digital camera, a video game or the like, and process the received picture signal to display a predetermined picture.

As shown in FIG. 2, the video processing apparatus 100 includes a component input unit 110, a first A/D converter 120, an LPF 130, a second A/D converter 144, a controller 150, a scaler 170, and a display unit 180. The component input unit 110 receives an external component signal. Here, the component signal contains a high resolution picture signal as a high quality picture signal, and a low resolution picture signal as a low quality picture signal. For example, the high resolution picture signal can have a format of 480P, 720P, 1080i, or similar. Further, the low resolution picture signal can have a format of 480i or similar. In this exemplary embodiment, the component input unit 110 will be described as an example of a signal input unit, and the component signal will be described as an example of a picture signal.

The first A/D converter 120 is connected to an output terminal of the component input unit 110, and converts an analog component signal received by the component input unit 110 into a digital component signal. In this exemplary embodiment, the first A/D converter 120 is described as an example of a first signal processor.

The LPF 130 is connected to the output terminal of the component input unit 110, and filters noise from the received component signal. The LPF 130 filters a high frequency component out of the component signal, and passes a low frequency component, thereby filtering out the noise. Here, the LPF 130 filters noise out of a low resolution component signal, e.g., a component signal having a format of 480i. In this exemplary embodiment, the LPF 130 is an example of a noise filter.

The second A/D converter 144 is connected to an output terminal of the LPF 130, and converts the analog component signal output from the LPF 130 into the digital component signal. Here, the second A/D converter 144 can apply the converting operation to the low resolution component signal, e.g., the component signal having a format of 480i. In this exemplary embodiment, the second A/D converter 144 is described as an example of a second processor.

The controller 150 controls the second A/D converter 144 to operate when the received component signal has a resolution lower than a predetermined reference. While controlling the second A/D converter 144 to operate, the controller 150 can control the first A/D converter 120 to stop operating. Here, the controller 150 stores a predetermined reference frequency and receives information about the frequency of the component signal. Therefore, the controller 150 determines that the resolution is low when the frequency of the component signal is lower than the reference frequency.

Meanwhile, the video processing apparatus 100 according to an exemplary embodiment of the present invention can include a video input unit 160 and a video decoder 140. The video input unit 160 receives a video signal. Here, the video signal may have lower resolution than that of a high definition (HD) signal. The video decoder 140 is connected to an output terminal of the video input unit 160, and receives the video signal output from the video decoder 160, thereby decoding the received video signal. According to an exemplary embodiment of the present invention, the video decoder 140 can include the second A/D converter 144. The second A/D converter 144 can convert an analog video signal into a digital video signal. In this case, the controller 150 can control the second A/D converter 144 to apply the A/D converting operation to the video signal or the component signal on the basis of user input information according to a user's selection.

The video processing apparatus 100 properly employs the first A/D converter 120 and the second A/D converter 144 for switching the high and low resolution picture signals without the expensive switch needed for filtering the noise out of the low resolution picture signal, thereby reducing the production cost thereof.

The video decoder 144 can further include a gain controller 142. The gain controller 142 is interposed between the output terminals of the LPF 130 and the video input unit 160 and an input terminal of the second A/D converter 144, and senses the level of the component signal from the LPF 130 or the video signal from the video input unit 160, thereby controlling the component signal or the video signal to have a predetermined level. For example, the gain controller 142 may be implemented by an auto gain control amplifier (AGC AMP) that compares the level of the input signal with a standard level previously set. When there is difference between the level of the input signal and the standard level, the AGC AMP can control the input signal to have the standard level. Thus, even though the non-standard component signal is input, the gain controller 142 converts the non-standard component signal into a standard component signal, thereby enhancing the picture quality without a significant production cost increase.

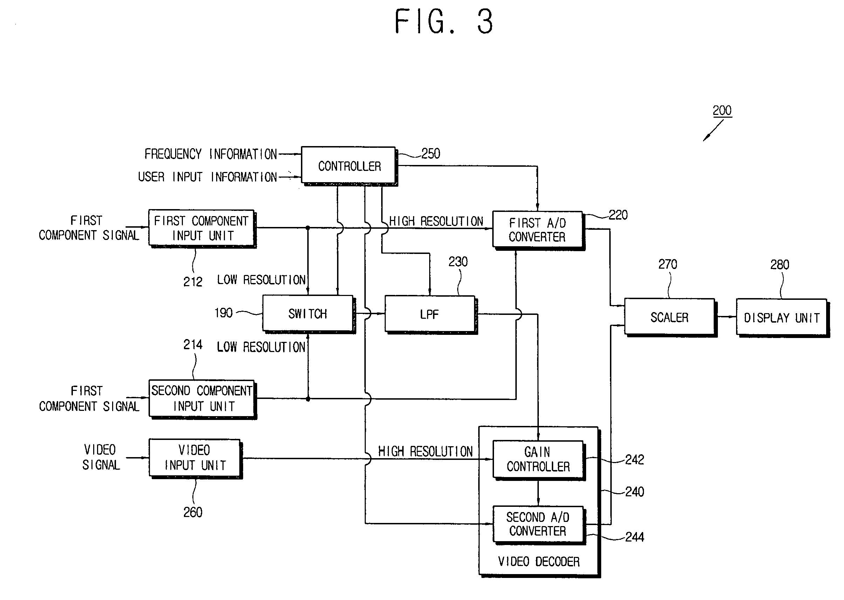

FIG. 3 is a block diagram schematically illustrating a video processing apparatus according to another exemplary embodiment of the present invention.

FIG. 3 shows a video processing apparatus 200 including a first component input unit 212, a second component input unit 214, a first A/D converter 220, a switch 190, a LPF 230, a second A/D converter 244, a controller 250, a scaler 270, and a display unit 280. In this embodiment, the first A/D converter 220, the LPF 230, the second A/D converter 244, the controller 250, the scaler 270, and the display unit 280 can have the similar configuration to those of the embodiment of FIG. 2.

The first and second component input unit 212 and 214 receive first and second component signals, respectively. In this embodiment, the first and second component signals can each have one of various resolutions as examples of first and second picture signals.

The switch 190 is interposed between each output terminal of the first and second component input units 212 and 214 and the input terminal of the LPF 230. Here, the switch 190 receives the first component signal from the first component input unit 212 and the second component signal from the second component input unit 214, and selectively outputs one of them on the basis of a control signal of the controller 250. At this time, the controller 250 transmits the control signal to the switch 190, thereby selecting either of the first component signal or the second component signal according to a user's selection.

The switch 190 can decrease each high frequency component of the first and second component signals. Thus, the switch 190 is placed in front of the LPF 230 and decreases each high frequency component of the first and second component signals in order to assist the LPF 230 in intercepting the high frequency component, thereby reducing a cost associated with the high frequency intercepting function of the LPF 230.

Here, the LPF 230 can filter the noise out of the low resolution first or second component signal. Then, the second A/D converter 244 applies the A/D converting operation to the first or second component signal whose noise is filtered out. Further, the scaler 270 processes the first or second component signal to be properly displayed on the display unit 280.

The video processing apparatus 200 further includes a video input unit 260 and a video decoder 240. In this embodiment, the video input unit 260 and the video decoder 240 can have the similar configuration to those of the embodiment of FIG. 2. The video decoder 240 can further include a gain controller 242. The gain controller 242 is interposed between the output terminals of the LPF 230 and the video input unit 260 and the input terminal of the second A/D converter 244, and senses each level of the first and second component signals from the LPF 230 and the level of the video signal from the video input unit 260, thereby controlling the first component signal, the second component signal, and the video signal to have a predetermined level.

As described above, the present invention provides a video processing apparatus that can be manufactured with a low production cost and yet is able conveniently to display a high quality picture.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A video processing apparatus comprising:
a signal input unit (110) arranged to receive a picture signal among a plurality of picture signals having different resolutions;
a first signal processor (120) arranged to process and output the picture signal;
a noise filter (130) arranged to filter noise from the picture signal;
a second signal processor (144) arranged to process and output the picture signal output from the noise filter (130); and
a controller arranged to control the second signal processor (144) to operate if the picture signal has the resolution lower than a predetermined value.

2. A video processing apparatus comprising:
a first signal input unit arranged to receive a first picture signal among a plurality of first picture signals having different resolutions;
a second signal input unit (214) arranged to receive a second picture signal among a plurality of second picture signals having different resolutions;
a switch (190) arranged to receive the first and second picture signals and outputs one of the first and second picture signals;
a first signal processor (220) arranged to process and output at least one of the first and second picture signals;
a noise filter (230) arranged to filter noise from the first or second picture signal output from the switch (190);
a second signal processor (244) arranged to process and output the first or second picture signal output from the noise filter (230); and
a controller (250) arranged to control the switch (190) to selectively output one of the first and second signals according to selection of a user, and control the second signal processor (244) to operate if the first or second picture signal has the resolution lower than a predetermined value.

3. The video processing apparatus according to claim 1 or 2, wherein the first signal processor (120, 220) and the second signal processor (140, 240) comprise a first analog-to-digital (A/D) converter and a second A/D converter respectively, arranged to perform an A/D conversion of the picture signal.

4. The video processing apparatus according to claim 1, 2 or 3 wherein the noise filter (130, 230) comprises a low pass filter arranged to filter a high frequency component from the picture signal.

5. The video processing apparatus according to claim 1, wherein the controller (150) determines that the resolution of the picture signal is lower than the predetermined value if the picture signal has a frequency lower than a reference frequency.

6. The video processing apparatus according to any preceding claim, further comprising a gain controller (142, 242) arranged to control gain of the picture signal output from the noise filter (130, 230).

7. The video processing apparatus according to claim 2, wherein the controller (250) determines that the resolution of the first or second picture signal is lower than the predetermined value if the picture signal has a frequency lower than a reference frequency.

8. The video processing apparatus according to claim 2, or any one of claims 3, 4, 5 or 7 as dependent on claim 2, further comprising a gain controller (142, 242) which controls gain of the first or second picture signal output from the noise filter (130, 230).

9. The video processing apparatus according to claim 6, further comprising a video input unit (160) arranged to receive another video signal, wherein the gain controller (242) controls gain of the picture signal output from the noise filter (130) or a picture signal output from the video input unit (160).

10. The video processing apparatus according to claim 8, further comprising a video input (260) unit which receives another video signal, wherein the gain controller (242) controls gain of the of the first or second picture signal output from the noise filter (230), or a picture signal output from the video input unit (260).
